# EUROPEAN PATENT APPLICATION

(11) **EP 3 872 708 A1**
(43) Date of publication of application: **01.09.2021**
(21) Application number: 21157002.3
(22) Date of filing: 13.02.2021
(51) Int. Cl.: G06K 17/00, G06K 7/10, G06K 19/07

(54) **A SYSTEM TO IDENTIFY OPTICAL ACCESSORIES OF A LUMINANCE METER**

(30) Priority: 25.02.2020 PL 43303820
(71) Applicant: GL OPTIC POLSKA Sp. z o.o. Sp. k., 62-040 Puszczykowo (PL)
(72) Inventor: DYLAK, Jacek, 60-461 Pozna (PL); LALEK, Jan, 62-040 Puszczykowo (PL); PRZYBYLA, Mikolaj, 62-002 Zlotkowo (PL)
(74) Representative: Gornicki, Pawel

(57) **Abstract**

The luminance meter (1) optical accessories identification system, featuring the transceiver antenna (2), RFID transmission and reception electronic control system (3), RFID tags (5a, 5b) and a PC (8) with the luminance meter (1), is characterized in that the transceiver antenna (2) is electrically connected to the electronic RFID transmission and reception control system (3), and the electronic system (3) is connected to a PC (8) with the luminance meter (1), and the transceiver antenna (2) and the electronic RFID transmission and reception control system (3) are placed in the housing of the luminance meter (1), while the RFID tags (5a i 5b) are built in rings (4a, 4b), permanently attached to the meter's replaceable optical accessories, such as lens (6) or optical filter (7). Stored in the memory of each RFID tag (5a and 5b) is a unique code, and in the PC software that operates the matrix luminance meter (1) the unique tag (5a, 5b) code is assigned to the ID of the lens (6) or the optical filter (7).

## Description

The present invention relates to an identification system of optical accessories of a luminance meter, such as a lens or optical filters.

The solution according to the invention enables remote, automatic identification of the installed optical system, which allows to load the appropriate calibration files into the matrix software of the luminance meter, without the need for intervention by the user of the measuring equipment.

Fixed focal length lenses are used in luminance meters, which simplifies their construction and reduces the price. This requires the use of interchangeable optics to adjust the field of view and the sensitivity of the system depending on the measurement conditions. Each change of the optical system requires a change of the matrix luminance meter software calibration values, because the calibration values are determined individually for each optical system. The user of matrix luminance meters available on the market must manually enter into the software the information about the type of accessories used for the measurement. This solution is burdensome and prone to making mistakes and there is a risk of obtaining incorrect measurement data.

The aim of the solution according to the invention was to develop a communication system between the luminance meter accessories and the software controlling meter operation, which allows to remotely detect and identify optical accessories, in particular the lens or optical filter, and then match the calibration data in the luminance meter software to the identified accessory.

This goal was achieved by building a system that uses the wireless communication, ie Radio Frequency Identification (RFID) in the UHF band.

International patent application WO2017136897 discloses a system that uses RFID to locate animals in enclosures. The animals were tagged with RFID tags that stored the identification data of each animal in memory, and the enclosure was divided into RFID tag detection zones. Each RFID detection zone has an RFID antenna for receiving a radio signal containing animal identity information generated by any RFID tag attached to the animal.

The luminance meter optical accessories identification system, featuring the transceiver antenna, RFID transceiver electronic control system; RFID tags and a PC with the luminance meter, is characterized in that the transceiver antenna is electrically connected to the electronic RFID transceiver control system, and the electronic system is connected to a PC with the luminance meter, the transceiver antenna and the electronic RFID transceiver control system are placed in the housing of the luminance meter, while the RFID tags are built in rings, permanently attached to the meter's replaceable optical accessories, such as lens or optical filter. Stored in the memory of each RFID tag, is a unique code, which is assigned by the manufacturer to the accessory, ie. lens or optical filter identifier in the PC software that operates the matrix luminance meter Upon detection of the RFID tag within the range of the transceiver antenna, the tag code is transmitted to the PC with the matrix luminance meter. The software identifies the accessory, lens or optical filter based on the detected RFID tag code and loads the matching calibration files into memory.

Preferably, the passive RFID tags, without their own power source, are used as RFID tags, activated by the electromagnetic wave energy emitted by the transceiver antenna.

Preferably, the transceiver antenna is positioned immediately adjacent to the lens mount and is shielded with an insulating plate against signals from inside the luminance meter to optimize communication between components of the system.

It is preferred that the tag rings are made of PVC or some other material which does not interfere with radio transmission.

The solution according to the invention allows to identify optical accessories without the participation of the matrix luminance meter user and to load the calibration files corresponding to the accessories into the memory of the PC with the meter. Thanks to this, the risk of meter user error is eliminated. In addition, the use of the solution according to the invention does not require an electrical connection between the optical accessories and the matrix luminance meter, which simplifies the system design and guarantees the required housing tightness. The use of passive RFID tags simplifies the system design, increases its reliability and lowers the cost.

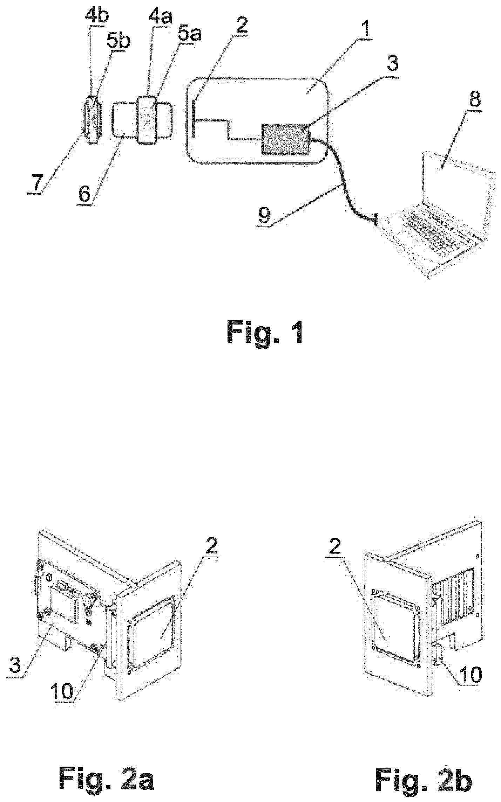

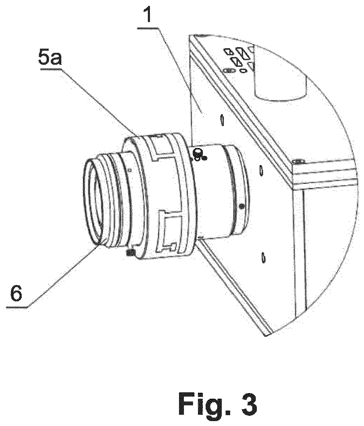

The subject of the invention will be explained in more detail in the example of the drawing, in which fig. 1 shows a drawing of the luminance meter optical accessory identification system, figs. 2a and 2b illustrate the perspective view of mutual positioning of the transceiver antenna and the electronic system for controlling RFID transmission and reception, fig. 3 shows the front face of the luminance meter with a lens mounted therein.

The luminance meter optical accessory identification device **1** consists of an transceiver antenna **2** connected electrically to the electronic circuit **3** that controls the RFID tag transmission and reception, **5a, 5b** passive RFID tags and a PC **8** with the luminance meter **1.** The tags **5a, 5b** are built into rings **4a, 4b,** permanently mounted on the interchangeable accessories of the meter, the lens **6** or the optical filter **7.** The transceiver antenna **2** and the electronics **3** are mounted in the luminance meter housing **1,** and the transceiver antenna **2** is located in the immediate vicinity of the lens mount **6** and it is covered by a plate **10** blocking signals from inside the luminance meter **1,** which ensures optimal conditions for communication between the transceiver antenna **2** and the tags **5a and 5b** on the lens **6** or filter **7.** The RFID transmission and reception control electronics **3** are connected to the PC **8** and the luminance meter **1** via a USB connector. Each **5a and 5b** RFID tag stores in its memory a unique code assigned to it by the manufacturer, which matches the lens **6** or optical filter 7 identifier in the matrix luminance meter 1 software. When the lens 6 or the optical filter 7, provided with the 5a or 5b tag, comes within range of the transceiver antenna 2, the 5a or 5b tag code is detected by the RFID transmission and reception control electronics 3. The electronics 3 transmit the code via USB 9 to the PC 8 with the connected matrix luminance meter 1. The PC 8 software matches the calibration files to the detected 5a or 5b tag code and loads the files it into the PC 8 memory.

## Claims

1. The luminance meter optical accessories identification system comprising the transceiver antenna, the electronic RFID transmission and reception control system, RFID tags and a PC operating the luminance meter, **characterized in that** the transceiver antenna (2) is electrically connected to the electronic RFID transmission and reception control system (3), and the electronic circuit (3) is connected to a PC (8) operating the luminance meter (1), and the transceiver antenna (2) and the electronic RFID transmission and reception control circuit (3) are housed in the luminance meter (1) housing, and RFID tags (5a and 5b) are embedded in the rings (4a, 4b), which are permanently mounted on the removable meter optical accessories, the lens (6) or a filter lens (7), wherein each RFID tag (5a, and 5b) stores a unique code in its memory, and in the matrix luminance meter (1) PC software, the unique tag code (5a, 5b) is assigned to the lens (6) or optical filter (7) identifier.

2. The luminance meter optical accessories identification device according to claim 1, **characterized in that** passive RFID tags (not having its own power supply), with are activated energy of the electromagnetic wave emitted by the transceiver antenna (2) are use as the RFID tags (5a, 5b).

3. The luminance meter optical accessory identification system according to claim 1, **characterized in that** the transceiver antenna (2) is placed in the immediate vicinity of the lens mount (6) and is covered with a plate (10) blocking signals from inside the luminance meter (1).

4. The luminance meter optical accessory identification system according to claim 1, **characterized in that** the rings (4a, 4b) with the tags (5a, 5b) are made of PVC or other material that does not cause interference with radio transmission.
